# EUROPÄISCHE PATENTANMELDUNG

(11) **EP 0 886 168 A2**
(43) Veröffentlichungstag der Anmeldung: **23.12.1998**
(21) Anmeldenummer: 98440130.7
(22) Anmeldetag: 17.06.1998
(51) Int. Cl.: G02F 1/09, G02B 6/26

(54) **Optischer Isolator und Wellenlängenmultiplexer-Modul mit integriertem optischen Isolator**

(30) Priorität: 18.06.1997 DE 19725720
(71) Anmelder: Alcatel Alsthom Compagnie Generale d'Electricité, 75088 Paris (FR)
(72) Erfinder: Hehmann, Jörg, 90455 Nürnberg (DE)
(74) Vertreter: Schätzle, Albin, Dipl.-Phys.

(57) **Zusammenfassung**

Die Erfindung betrifft einen optischen Isolator, wie sie insbesondere in faseroptischen Datenübertragungs- und Verstärkersytemen eingesetzt werden. Der erfindungsgemäß optischer Isolator besteht aus einem Träger (TR), der mit einer Ausnehmung (A) versehen ist. In diese Ausnehmung (A) werden zwei keilförmige Platten (KP1, KP2) aus optisch doppelbrechendem Material und ein Faraday-Rotator (FR) eingesetzt. Vorzugsweise besteht der Träger (TR) aus einem Siliziumkristall, in dem sich die Ausnehmung (A) hochgenau durch naßchemisches Ätzen erzeugen läßt. Die einzelnen Komponenten sind in der Ausnehmung passiv über Anschläge justiert. Der erfindungsgemäße optische Isolator besteht somit nur aus den für die Funktion absolut unerläßlichen Komponenten.

Ferner wird ein vorteilhaftes Wellenlängenmultiplexer-Modul mit integriertem optischen Isolator angegeben. Das Wellenlängenmultiplexer-Modul benötigt für drei optische Ein-/Ausgänge lediglich zwei Kugellinsen als Abbildungselemente und ist damit ebenfalls sehr einfach aufgebaut.

## Beschreibung

Die Erfindung betrifft einen optischen Isolator nach dem Oberbegriff des Anspruchs 1. Die Erfindung betrifft ferner ein Wellenlängenmultiplexer-Modul nach Anspruch 5 mit einem integrierten optischen Isolator. Optische Isolatoren werden insbesondere in faseroptischen Datenübertragungssystemen benötigt. Sie sollen u. a. verhindern, daß an Grenzflächen reflektiertes oder gestreutes Licht auf optisch aktive Bauelemente wie etwa Laserdioden oder optische Faserverstärker trifft und deren Funktion beeinträchtigt.

Ein optischer Isolator nach dem Oberbegriff des Anspruchs 1 ist bekannt aus der EP-B-054 411. Der dort beschriebene optische Isolator besteht im wesentlichen aus zwei keilförmigen Platten aus optisch doppelbrechendem Material und einem dazwischen angeordneten Faraday-Rotator. Die Wirkungsweise dieses optischen Isolators beruht darauf, daß ein paralleler Lichtstrahl, welcher von einer Seite her auf den Isolator trifft, diesen auf der anderen Seite auch wieder als paralleles Strahlenbündel verläßt und sich dort, etwa mit Hilfe einer Linse, in einen Lichtwellenleiter einkoppeln läßt. Paralleles Licht hingegen, welches von dieser entgegengesetzten Seite auf den Isolator trifft, verläßt den optischen Isolator als divergentes Strahlenbündel und kann nicht wieder eingekoppelt werden, sofern die Lichtwellenleiter und die Abbildungsoptik entsprechend angeordnet ist.

Der dort beschriebene optische Isolator ist unabhängig von der Polarisation des auftreffenden Lichts und daher besonders geeignet für Anwendungen in Datenübertragungsystemen mit nicht die Polarisation erhaltenden Standardfasern. Da jedoch bei der Einkopplung von Licht in optische Fasern sehr hohe Anforderungen an die Lagepräzision der beteiligten Abbildungselemente gestellt werden, ist bei dem bekannten optischen Isolator eine aufwendige aktive Justierung der einzelnen Komponenten erforderlich. Aktive Justierung bedeutet in diesem Zusammenhang, daß die Komponenten in den optischen Strahlengang eingeführt und in ihrer Einbauposition so lange justiert werden, bis der Lichtstrahl die gewünschten Eigenschaften hat. Üblicherweise ist dies eine sehr zeitaufwendige Handarbeit, bei der man unter ständiger Beobachtung eines geeigneten Meßgerätes die Bauteile mittels hochgenauer Verstelleinheiten justiert. Aufgrund der damit verbundenen Kosten sind optische Isolatoren dieses Typs noch immer sehr teuer und erschweren somit die weitere Verbreitung von faseroptischen Datenübertragungssystemen bis in den Endteilnehmerbereich hinein.

Es ist daher Aufgabe der Erfindung, einen optischen Isolator anzugeben, der aus nur wenigen Einzelteilen besteht, die nicht aktiv justiert werden müssen. Der optische Isolator soll sehr kleine räumliche Abmessungen haben und dennoch mechanisch robust sein. Außerdem soll der optische Isolator den Aufbau eines optisch isolierten Wellenlängenmultiplexer-Moduls ermöglichen, welches aus möglichst wenigen Einzelteilen aufgebaut ist und kostengünstig gefertigt werden kann.

Die Erfindung löst diese Aufgabe mit Hilfe der in Anspruch 1 angegebenen Merkmale. Durch die passive Justierung über Anschlagskanten entfällt die aufwendige Ausrichtung der einzelnen Komponenten zueinander. Ferner sind bei der erfindungsgemäßen Anordnung keine zusätzlichen, die Lage der einzelnen optischen Komponenten zueinander fixierende Bauteile (Halterungen, Führungsstifte etc.) erforderlich. Als Folge davon läßt sich der erfindungsgemäße optische Isolator mit nur sehr wenigen Bauteilen aufbauen. Der für die Lagefixierung der optischen Komponenten verwendete Träger kann überdies als Haltestruktur für weitere Bauteile verwendet werden. Der erfindungsgemäße optische Isolator läßt sich somit auf einfache Weise zu höheren Funktionseinheiten erweitern. Ein Beispiel für eine derartige Funktionseinheit ist ein Wellenlängenmultiplexer-Modul nach einem der Ansprüche 5 bis 7.

Ein weiteres Ausführungsbeispiel für ein Wellenlängenmultiplexer-Modul nach einem der Ansprüche 8 oder 9 umfaßt ein zusätzliches Justierelement, welches ebenfalls in die Ausnehmung eingesetzt ist. Dieses Justierelement erlaubt es, auch bei größeren Herstellungstoleranzen eine Justierung des optischen Isolators in nur einem einzigen Justierschritt vorzunehmen.

Die Erfindung wird nachfolgend anhand der Ausführungsbeispiele und der Zeichnungen eingehend erläutert. Es zeigen:
- Fig. 1a:: Einen erfindungsgemäßen optischen Isolator nach Anspruch 1 in Draufsicht,
- Fig. 1b:: Einen erfindungsgemäßen optischen Isolator nach Anspruch 1 in einem seitlichen Schnitt,
- Fig. 2:: Ein erfindungsgemäßes Wellenlängenmultiplexer-Modul nach Anspruch 9 mit integriertem zweistufigen optischen Isolator in Draufsicht,
- Fig. 3:: Strahlengang für ein in Fig. 2 dargestelltes Wellenlängenmultiplexer-Modul,
- Fig. 4:: Strahlengang für ein in Fig. 2 dargestelltes Wellenlängenmultiplexer-Modul, bei dem der optische Isolator im Vergleich zu Fig. 3 eine entgegengesetzte Durchlaßrichtung hat.

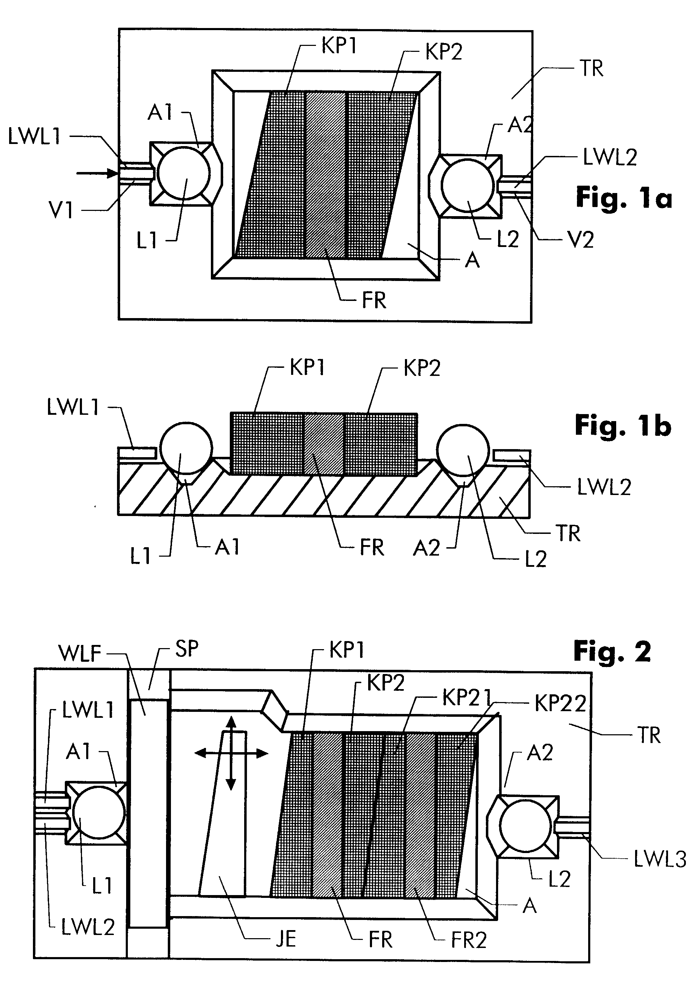

Die Fig. 1a und 1b zeigen einen erfindungsgemäßen optischen Isolator in Draufsicht bzw. in einem seitlichen Schnitt. Der optische Isolator ist auf einem Träger TR aufgebaut, der eine Ausnehmung A enthält. Der Träger besteht aus einem mikrostrukurierbaren Material. Darunter seien hier solche Materialien verstanden, die - mit Hilfe geeigneter Verfahren - auf etwa einen Mikrometer genau bearbeitet werden können. Möglich sind derartige Bearbeitungsgenauigkeit derzeit beispielsweise für Halbleiterkristalle, Kunststoffe oder auch Keramiken. In einem bevorzugten Ausführungsbeispiel der Erfindung besteht der Träger aus einem Siliziumkristall. Die Ausnehmung wird dann vorzugsweise naßchemisch in den Kristall hineingeätzt. Derartige Ätzverfahren sind an anderer Stelle eingehend beschrieben, siehe z. B. EP-B1-0 418 423.

In die Ausnehmung A sind zwei keilförmige Platten aus optisch doppelbrechendem Material KP1 und KP2 sowie ein Faraday-Rotator eingesetzt. Die einzelnen Komponenten haben dabei die in Fig. 1a dargestellte Orientierung zueinander, d. h. der Faraday-Rotator ist zwischen den keilförmigen Platten angeordnet und die Platten selbst sind so orientiert, das die Anordnung der drei Komponenten punktsymmetrisch ist. Die Funktion der keilförmigen Platten und des Faraday-Rotators ist ausführlich in der bereits oben zitierten EP-B-054 411 erläutert. Im dargestellten Ausführungsbeispiel sind die Unterseiten der keilförmigen Platten und die Bodenfläche der Ausnehmung A eben, d. h. die keilförmigen Platten liegen plan auf der Bodenfläche der Ausnehmung auf. Andere Gestaltungen der Bodenfläche und der Plattenunterseite sind jedoch ebenfalls möglich. So lassen sich mittels Spritzgußtechniken aus Kunststoffen Träger herstellen, deren Bodenfläche mit Rippen versehen sind. Die nach oben weisende Kanten dieser Rippen tragen dann die keilförmigen Platten.

Entscheidend für die Gestaltung der Ausnehmung und der darin einzusetzenden Komponenten ist, daß die Komponenten über Anschläge in der Vertiefung passiv justiert sind. Eine Justierung wird üblicherweise als passiv bezeichnet, wenn die endgültige Lage der zu justierenden Bauteile untereinander allein durch deren geometrische Abmessungen festlegt ist. Die Bauteile berühren sich dazu entweder nur an einzelnen Punkten ("Punktanschlag"), entlang von Linien ("Kantenanschlag") oder im Bereich von Flächenabschnitten ("Flächenanschlag"). Im Ausführungsbeispiel nach Fig. 1 erfolgt die Lagefixierung über Kantenanschläge. Diese Kanten entstehen am Übergang zwischen der ebenen Bodenfläche der Ausnehmung und deren seitlichen, geneigten Begrenzungsflächen. Bei genügend genauer Ausführung der einzusetzenden Komponenten lassen sich diese praktisch spielfrei in die Ausnehmung A einsetzen.

Wie weiter in Fig. 1a erkennbar, sind auf dem Träger TR zu beiden Seiten des optischen Isolators jeweils eine optische Faser LWL1 bzw. LWL2 angeordnet. Die optischen Fasern LWL1 und LWL2 sind in V-förmigen Vertiefungen V1 und V2 eingelegt, wodurch deren Lage genau fixiert ist. Als Abbildungselemente sind zwei Kugellinsen L1 und L2 vorgesehen, die unmittelbar vor den Enden der beiden optischen Fasern LWL1 und LWL2 positioniert sind. Die Justierung der Kugellinsen L1 und L2 erfolgt in diesem Ausführungsbeispiel ebenfalls passiv über Punktanschläge. Dazu sind die Linsen in pyramidenförmige Ausnehmungen A1 und A2 eingesetzt. Anstelle von Kugellinsen können natürlich auch andere Linsen wie etwa asphärische oder zylindrische Linsen verwendet werden.

Fig. 2 zeigt ein besonders vorteilhaftes Anwendungsbeispiel für den erfindungsgemäßen optischen Isolator. Es handelt sich dabei um ein Wellenlängenmultiplexer-Modul mit integriertem optischen Isolator. Derartige Wellenlängenmultiplexer-Module werden beispielsweise verwendet in optischen Faserverstärkersystemen. Dort besteht die Aufgabe, Pumplicht in eine optische Faser einzukoppeln. Das Pumplicht hat eine andere Lichtwellenlänge als das in der Faser geführte Licht, welches der eigentlichen Datenübertragung dient. Bekannt sind derartige Wellenlängenmultiplexer-Module beispielsweise aus EP-A-0 723 170 und EP-A-492 850. Bei den dort beschriebenen Wellenlängenmultiplexer-Modulen werden als eigentliche Multiplexer Wellenlängenfilter verwendet, die die Eigenschaft haben, Licht einer ersten Wellenlänge hindurchtreten zu lassen und Licht einer zweiten Wellenlänge zu reflektieren.

Das erfindungsgemäße Wellenlängenmultiplexer-Modul gemäß Fig. 2 beruht auf dem in Fig. 1a und 1b skizzierten optischen Isolator. Der optische Isolator in Fig. 2 ist jedoch zur Verbesserung der optischen Isolation zweistufig ausgeführt, d. h. er besteht aus zwei einzelnen, direkt hintereinander angeordneten optischen Isolatoren, die jeweils in der oben beschriebenen Weise aufgebaut sind. Der erste optische Isolator umfaßt die keilförmigen Platten KP1 und KP2 sowie den Faraday-Rotator FR, der zweite optische Isolator die keilförmigen Platten KP21 und KP22 sowie den Faraday-Rotator FR2.

Auf dem Träger TR ist neben dem zweistufigen optischen Isolator ein Wellenlängenfilter WLF angeordnet. Um die Lage des Wellenlängenfilters WLF gegenüber den anderen optischen Komponenten festzulegen, ist das Wellenlängenfilter in eine spaltförmige Ausnehmung SP eingesetzt. Diese Ausnehmung befindet sich zwischen dem optischen Isolator und der Kugellinse L1. Falls als Träger ein Siliziumkristall verwendet wird, so läßt sich die Ausnehmung SP beispielsweise durch einen Sägeschnitt erzeugen.

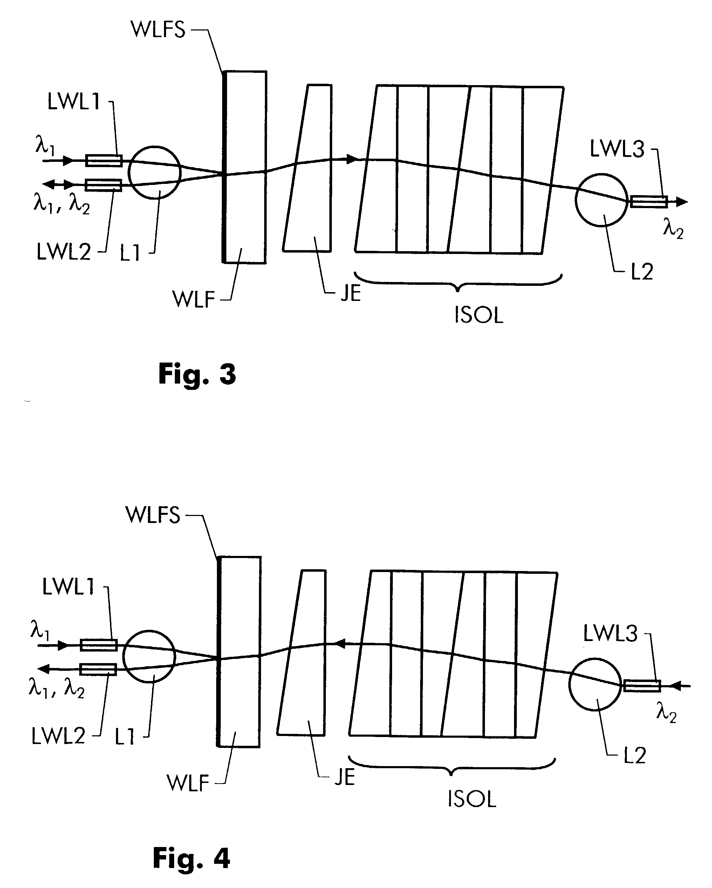

Auf der dem Wellenlängenfilter zugewandten Seite der Anordnung befinden sich ein erster und ein zweiter Lichtwellenleiter LWL1 bzw. LWL2. Erfindungsgemäß dient nur eine einzige Linse als Abbildungselement für beide Lichtwellenleiter. Zur Erläuterung des Strahlengangs und der Funktion dieser Anordnung wird die Fig. 3 herangezogen. Im ersten Lichtwellenleiter LWL1 wird Licht einer ersten Wellenlänge λ₁ geführt. Dieses Licht tritt aus der Öffnung des ersten Lichtwellenleiters LWL1 aus und wird von der davor angeordneten Linse L1 kollimiert. Bei dieser Linse handelt es sich vorzugsweise um eine Kugellinse; denkbar ist aber auch der Einsatz einer asphärischen Linse. Der kollimierte Strahl trifft nun auf das Wellenlängenfilter WLF. Auf der der Linse zugewandten Seite des Wellenlängenfilters WLF ist eine Schichtenfolge WLFS aufgebracht ist, welche die eigentliche Filterung bewirkt. Licht der Wellenlänge λ₁ wird von der Schichtenfolge WLFS reflektiert. Der reflektierte Strahl trifft erneut auf die Linse L1 und wird von dieser auf die Öffnung des ersten Lichtwellenleiters LWL2 fokussiert.

Im zweiten Lichtwellenleiter LWL2 wird Licht einer zweiten Wellenlänge λ₂ geführt, die sich von der Wellenlänge λ₁ unterscheidet. Dieses Licht tritt aus der Öffnung des Lichtwellenleiters LWL2 aus und wird ebenfalls von der Linse L1 kollimiert. Der kollimierte Strahl trifft auf das Wellenlängenfilter WLF, welches für Licht dieser zweiten Wellenlänge λ₂ durchlässig ist. Der Lichtstrahl gelangt daher auf das Justierelement JE und von dort auf die Komponenten des optischen Isolators ISOL. Von der Linse L2 wird der Strahl auf die Öffnung eines dritten Lichtwellenleiters LWL3 fokussiert.

Ebenso ist es möglich und je nach Anwendung des Wellenlängenmultiplexer-Moduls auch zweckmäßig, daß das Licht der zweiten Wellenlänge λ₂ nicht aus dem zweiten Lichtwellenleiter LWL2, sondern aus dem dritten Lichtwellenleiter LWL3 austritt. Der Strahlengang hierfür ist in Fig. 4 gezeigt. Der optische Isolator ist in diesem Falle mit entgegengesetzter Durchlaßrichtung einzubauen. Das Licht der zweiten Wellenlänge λ₂ nimmt nun den umgekehrten Weg, d. h. es durchläuft zuerst den optischen Isolator ISOL und passiert anschließend das Wellenlängenfilter WLF.

Aufgrund der erfindungsgemäßen Aufbautechnik kann das in den Fig. 3 und 4 dargestellte Wellenlängenmultiplexer-Modul ohne aktive Justierungsschritte aufgebaut werden. Es ist jedoch u. U. bei bestimmten Materialien und Bearbeitungsmethoden aus Kostengründen nicht vermeidbar, daß Herstellungstoleranzen auftreten, die eine einwandfreie Funktion des optischen Isolators beeinträchtigen können. In einem weiteren Ausführungsbeispiel der Erfindung ist daher vorgesehen, in solchen Fällen ein zusätzliches Justierelement JE in die Ausnehmung A aufzunehmen. Das Justierelement JE liegt im Strahlengang des optischen Isolators und ist zumindest in einer Raumrichtung verschiebbar angeordnet. Die Gestalt des Justierelements JE ist ferner so zu wählen, daß sich bei einer Verschiebung des Justierelements der Strahlengang ändert. Bei dem in den Fig. 2, 3 und 4 dargestellten Ausführungsbeispielen ist das Justierelement JE keilförmig und läßt sich sowohl in Richtung der optischen Achse als auch senkrecht dazu verschieben. Somit läßt sich eine Justierung des optischen Isolators in nur einem einzigen Justierschritt vornehmen. In der endgültigen Lage werden die einzelnen Komponenten beispielsweise durch Verkleben dauerhaft fixiert. Zum Schutz gegen Umwelteinflüsse kann der Träger mit den sich darauf befindenden Komponenten in ein geeignetes Gehäuse eingebaut werden.

Das hier beschriebene Wellenlängenmultiplexer-Modul erfordert nur sehr wenige Bauelemente, wodurch sich niedrige Herstellungskosten bei hoher Zuverlässigkeit realisieren lassen. Ein erfindungsgemäßes Wellenlängenmultiplexer-Modul ist auf der Grundlage eines Silizium-Trägers auf einer Fläche von nur 3x7 mm aufgebaut worden und ist damit im Vergleich zu bekannten Wellenlängenmultiplexer-Modulen wesentlich kleiner. Da der Aufbau des Moduls im wesentlichen nur in der Bereitstellung des Trägers und anschließendem Einsetzen der Komponenten besteht, läßt sich, gerade im Hinblick auf die rasche Weiterentwicklung der Ätztechnik und Mikromechanik, erwarten, daß eine kostengünstige Serienfertigung dieser Wellenlängenmultiplexer-Module alsbald möglich sein wird.

## Patentansprüche

1. Optischer Isolator mit zwei keilförmigen Platten (KP1, KP2) aus optisch doppelbrechendem Material und einem dazwischen angeordneten Faraday-Rotator (FR),
**dadurch gekennzeichnet, daß** die Platten und der Faraday-Rotator auf einem Träger (TR) angeordnet sind, der eine Ausnehmung (A) hat, und daß die keilförmigen Platten und der Faraday-Rotator in die Ausnehmung (A) so eingesetzt sind, daß diese über Anschläge passiv justiert sind.

2. Optischer Isolator nach Anspruch 1, bei dem
a) der Träger (TR) aus Silizium besteht,
b) die Ausnehmung (A) im Träger eine ebene Bodenfläche hat,
c) diese Ausnehmung durch Ätzen erzeugt ist
d) und die Anschläge als gerade Kanten ausgeführt sind.

3. Optischer Isolator nach einem der vorhergehenden Ansprüche, der eine erste und eine zweite Linse (L1, L2) hat, zwischen denen die keilförmigen Platten (KP1, KP2) und der Faraday-Rotator (FR) angeordnet sind.

4. Optischer Isolator nach einem der vorhergehenden Ansprüche, bei dem zwei zusätzliche keilförmige Platten (KP21, KP22 in Fig. 2) aus optisch doppelbrechendem Material und ein zusätzlicher Faraday-Rotator (FR2) in die Ausnehmung (A) so eingesetzt sind, daß diese zusätzlichen Bauteile (KP21, KP22, FR2) eine zweite optische Isolatorstufe bilden.

5. Wellenlängenmultiplexer-Modul mit einem optischen Isolator nach Anspruch 3 und einem Wellenlängenfilter (WLF in Fig. 2), welches Licht einer ersten Wellenlänge reflektiert und Licht einer zweiten Wellenlänge hindurchtreten läßt.

6. Wellenlängenmultiplexer-Modul nach Anspruch 5, bei dem
a) das Licht der ersten Wellenlänge aus einem ersten Lichtwellenleiter (LWL1 in Fig. 3) austritt und von einer ersten Linse (L1) kollimiert wird,
b) dieser kollimierte Strahl auf das Wellenlängenfilter (WLF) trifft und dort reflektiert wird,
c) der reflektierte Strahl auf die erste Linse (L1) trifft und von dort in einen zweiten Lichtwellenleiter (LWL2) eingekoppelt,
d) und bei dem das Licht der zweiten Wellenlänge aus dem zweiten Lichtwellenleiter (LWL2) austritt, von der ersten Linse (L1) kollimiert wird, das Wellenlängenfilter (WLF) und den optischen Isolator (ISOL) durchtritt und von einer zweiten Linse (L2) so fokussiert wird, daß es in einen dritten Lichtwellenleiter (LWL3) einkoppelt.

7. Wellenlängenmultiplexer-Modul nach Anspruch 5, bei dem
a) das Licht der ersten Wellenlänge aus einem ersten Lichtwellenleiter (LWL1 in Fig. 4) austritt und von einer ersten Linse (L1) kollimiert wird,
b) dieser kollimierte Strahl auf das Wellenlängenfilter (WLF) trifft und dort reflektiert wird,
c) der reflektierte Strahl auf die erste Linse (L1) trifft und von dort in einen zweiten Lichtwellenleiter (LWL2) eingekoppelt,
d) und bei dem das Licht der zweiten Wellenlänge aus einem dritten Lichtwellenleiter (LWL3) austritt, von einer zweiten Linse (L2) kollimiert wird, den optischen Isolator (ISOL) und das Wellenlängenfilter (WLF) durchtritt und von der ersten Linse (L1) so fokussiert wird, daß es in den zweiten Lichtwellenleiter (LWL2) einkoppelt.

8. Wellenlängenmultiplexer-Modul nach einem der Ansprüche 5 bis 7 mit einem optischen Justierelement (JE), welches in der Ausnehmung (A) im Träger (TR) in der Weise verschiebbar angeordnet ist, daß sich bei einer Verschiebung ein Lichtstrahl, welcher durch das optische Justierelement hindurchtritt, seine Richtung ändert.

9. Wellenlängenmultiplexer-Modul nach Anspruch 8, bei dem das optische Justierelement (JE) keilförmig ist.
